(19) Europäisches Patentamt
European Patent Office
Office européen des brevets

(11) EP 3 095 691 A1

(12) EUROPEAN PATENT APPLICATION

(43) Date of publication:
**23.11.2016 Bulletin 2016/47**

(21) Application number: **15382269.7**

(22) Date of filing: **22.05.2015**

(51) Int Cl.:
***B64C 3/26*** *(2006.01)* ***B64C 5/02*** *(2006.01)*
***B64C 3/18*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Airbus Operations, S.L.**
**28906 Getafe (Madrid) (ES)**

(72) Inventors:
- **Garcia Nieto, Carlos**
  **28906 Getafe (Madrid) (ES)**
- **Crespo Peña, Soledad**
  **28906 Getafe (Madrid) (ES)**
- **Vàsquez Castro, Jesus, Javier**
  **28906 Getafe (Madrid) (ES)**

(74) Representative: **Carpintero Lopez, Francisco et al**
**Herrero & Asociados, S.L.**
**Alcalá 35**
**28014 Madrid (ES)**

# (54) MULTI-SPAR TORSION BOX STRUCTURE

(57) The present invention refers to a multi-spar torsion box structure 1 comprising a plurality of spars of composite material arranged to form a multi-cell structure with two or more cells extending span-wise at the torsion box, and upper and lower skin covers of composite material respectively joined to upper and lower surfaces of the multi-cell structure. The structure further comprises at least one belt-like reinforcing element 20 extending on the outer perimeter of the torsion box, and fixed to the upper and lower surfaces of the multi-cell structure, and transversely arranged with respect to the span-wise direction of the torsion box. The belt-like reinforcing element is made of a metallic or a composite material. The invention can advantageously be used in the manufacture of aircrafts lifting surfaces, such as horizontal tail planes (HTP) or wings.

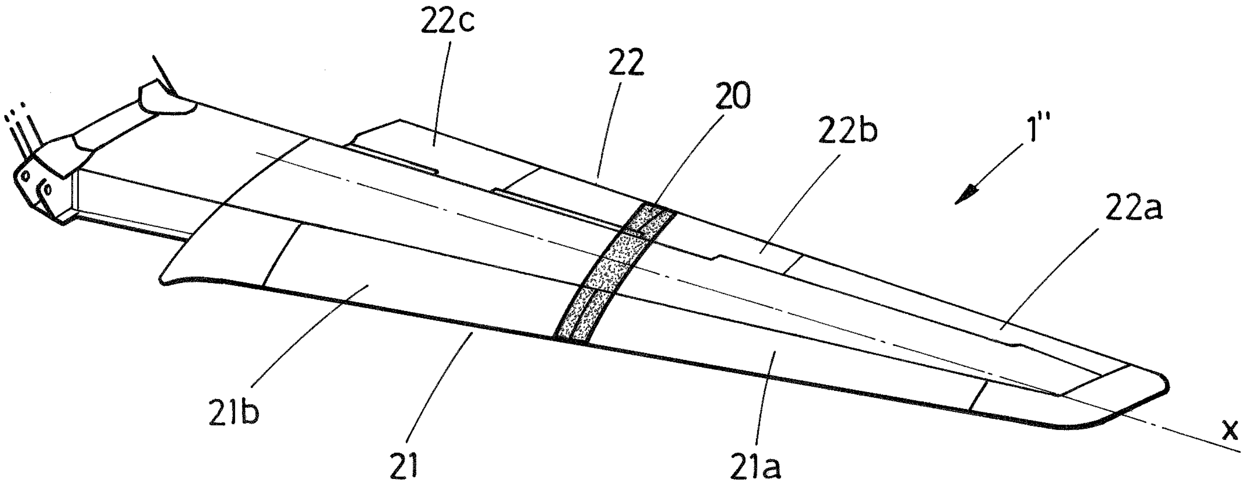


FIG.2A



Printed by Jouve, 75001 PARIS (FR)

## Description

### Object of the invention

The present invention refers in general to aircraft primary structures formed with torsion boxes, and manufactured mainly with composite materials such as Carbon Fiber Reinforced Plastic (CFRP) materials.

An object of the invention is to provide a multi-spar torsion box structure resistant to torsional deformations and which at the same time has a reduced weight and it is simple to manufacture.

The invention can advantageously be used in the manufacture of aircrafts lifting surfaces, such as horizontal tail planes (HTP) or wings.

### Background of the invention

The most widespread structure for a torsion box is formed by front and rear spars and a plurality of ribs transversally arranged and fitted to front and rear spars, such as to form together a box-like configuration. The torsion box also includes upper and lower skin panels internally reinforced by stringers. The main functions of the ribs are: to provide torsional rigidity, longitudinally limiting the skins and the stringers so as to discretize buckling loads, maintaining the shape of the aerodynamic surface and supporting local load introductions resulting from actuator fittings, support bearings and similar devices which are directly secured to the front and rear ribs.

Another known structural concept for a torsion box is the "multi-spar", wherein the ribs are dispensed with and several spars are introduced for creating closed cells in order to replace the functions of the ribs of the previous concept. The multi-spar concept is typically used for the construction of Horizontal Tail Plane (HTP) of an aircraft, also known as horizontal stabilizer.

Figures 1A,1B show an example of a multi-spar torsion box for a HTP obtained from a Carbon Fiber Reinforced Plastics (CFRP) material. The HTP (1) is formed by two lateral torsion boxes (1’, 1") (right-hand side and left-hand side torsion boxes) joined to each other at the central region of the HTP (1), and symmetrically arranged with respect to the axis of symmetry of the horizontal tail plane.

The torsion box is divided in three cells (3) by means of eight C-shaped spars grouped in pairs. The intermediate C-shaped spars (4) have, extended spar flanges and are folded at the free edges to form a stringer web (9) together with the adjacent spar. The multi-spar structure of the example also integrates the rear and front spars (7,8), and upper and lower coves (skins) (5,6). Other components of the HTP structure, such as leading and trailing edges and elevators, are assembled with the torsion box.

The European patent application EP-2153979 A1, describes a multi-spartorsion box with more detail.

A multi-spar torsion box has the advantage that its construction is simple, however it is known that multi-spar torsion boxes have problems transmitting highly concentrated transverse loads, hence they may be affected by deformations caused by transverse loads. The reason for this drawback, is that in a multi-spar torsion box there are no transversal ribs. Therefore, since the multi-spar concept as such does not have much torsional rigidity, sometimes, it is necessary to reinforce the structure by using additional reinforcement elements such as ribs, bars or other type of reinforcement elements, fitted at critical areas of the structure.

This is the solution proposed in the U.S. Patent application US2009/0001218 A1, wherein several brackets and diagonal bars are fitted to the structure, in order to reinforce the same against torsional deformations.

However, the installation of these reinforcement elements inside the torsion box is cumbersome and time-consuming, because a multi-spar torsion box is a closed structure, hence the access to the interior is difficult. Furthermore, the installation of these reinforcement elements, increase the manufacturing and assembly costs and increase as well the weight of the structure.

### Summary of the invention

The present invention is defined in the attached independent claim and it overcomes the above-mentioned drawbacks of the prior art, by providing a multi-spar torsion box structure incorporating a reinforcing element in the form of a belt or strip which extends around the outer perimeter of a multi-spar torsion box, and it is transversely arranged with respect to an axis oriented in the span-wise direction of the torsion box, in order to reinforce the same against torsion loads.

Therefore, an aspect of the invention refers to a multi-spar torsion box structure comprising a plurality of spars of composite material longitudinally arranged to configure a multi-cell structure with two or more cells extending span-wise at the torsion box. The structure comprises at least one belt-like (or strip-like) reinforcing element extending following the shape of the outer perimeter of the torsion box, and fixed to upper and lower surfaces of the multi-cell structure, and which is transversely arranged with respect to an axis oriented in the span-wise direction..

The belt-like reinforcing element is made of a metallic or a composite material, and it is dimensioned, that is, its width and thickness are calculated for each particular application, to withstand torsional loads and avoid deformations of the torsion box.

Preferably, the belt-like reinforcing element is constructed as a closed loop, which means that it has no ends, and it extends around the torsion box and for that it has a similar shape than the shape of the outer perimeter or contour of the torsion box.

In alternative embodiments of the invention, the belt-like reinforcing element also extends around other parts of the structure, for example in the case of an HTP, the belt-like reinforcing element also extends around a leading edge and/ or a trailing edge of the structure, in such a way that the leading edge and/ or the trailing edge can be integrated in the structure. In this case, the shape of the belt-like reinforcing element is the similar to the outer perimeter or contour of the assembly formed by the torsion box and leading edge and/ or a trailing edge.

When the reinforcement element is made of a metallic material, this is fixed by suitable mechanical or bonding means, to the torsion box and leading edge and/ or a trailing edge, once these parts of the structure are cured.

When the belt-like reinforcing element is obtained from a composite material, the reinforcement element is obtained as a stack of plies of a composite material forming the belt configuration, and with the particularity that the plies of the stack are preferably arranged at the load introduction direction, transversely to an axis placed at the span-wise directions so that the fibers are orientated in the direction of the torsional forces that the reinforcement element has to withstand, such the function of this reinforcement element is achieved.

The belt-like reinforcing element obtained from a composite material, is formed during the same manufacturing process of the structure, in such a way that the reinforcing element is an integral part of the structure. For example, the reinforcing element is formed as a pre-form which is placed on the skin covers, or alternatively inserted between the cells and skin covers, and then the whole assembly is co-cured together.

In other implementations of the invention, the belt-like reinforcing element is cured independently, and then co-bonded or secondary bonded with the structure.

The invention also refers to an horizontal tail plane for an aircraft having two symmetrically arranged multi-spar torsion box structures according to the invention.

Some advantages of the invention can be summarized as follows:

- A torsion box is reinforced against torsional deformations, with minimal manufacturing and assembly time and cost compared with prior art multi-spars concepts.

- Since the reinforcement element is placed at the outer surface of the structure, its installation is very simple, since the interior of the multi-spar torsion box does no need to be accessed. The installation of ribs or other internal structural elements inside a multi-spar torsion box is avoided.

- Since the reinforcing element is a strip, that is, a thin body, the weight of the same is optimized and the weight of the overall weight of the structure is not increased significantly.

- Other parts of the structure, like leading edge and trailing edges, can be integrated in the structure, by using the belt-like reinforcement element as support for fitting some panels or caps of the leading and/or trailing edges.

## Brief description of the drawings

Preferred embodiments of the invention are henceforth described with reference to the accompanying drawings, wherein:

Figure 1.- shows a multi-spar torsion box structure of the prior art conventional used for the construction of a HTP. Figure 1A is a perspective view of the HTP, and figure 1B is an exploded view of one of the torsion boxes.

Figure 2.- shows a in figure 2A a perspective view of a torsion box including a reinforcement element according to the invention. Figures 2B - 2C show in top plan view other preferred arrangements for the reinforcement element. The arrows "Y" indicate the direction of a load introduction in the HTP in each particular case. The axis "X" indicates the span-wise direction of the torsion box.

Figure 3.- shows a cross-sectional view of a multi-cell torsion box including a reinforcement element according to the invention, wherein figure 3A shows the reinforcement element is a separate element fastened or bonded to the torsion box, figure 3B shows the reinforcement element as integrated element in the manufacturing process placed between performs of covers and cells or spars.

Figure 4.- shows a similar representation than figure 3, wherein figure 4A shows the reinforcement element is a separate element fastened or bonded to the torsion box and extending on the leading edge as a continuous element and as a discontinuous element in figure 4B. Figures 4C-4F shows the reinforcement element as a integrated element in the manufacturing process and extending following the leading edge, and in different locations, on the skin covers pre-forms (figures 4C,4D), and between skin covers pre-forms and cells/spars pre-forms (figures 4E,4F).

Figure 5.- shows a partial perspective view of a torsion box with a reinforcement element extending on outer surfaces of a fitting for a trailing edge.

Figure 6.- shows a similar representation than figure 4, but with the reinforcement element extending over the trailing edge instead of the leading edge. In figures 6A,6B the reinforcement element is a separate element fastened or bonded to the torsion box, and in figures 6C-6F it is an integrated element obtained in the same manufacturing process, on the skin covers pre-forms (figures 6C,6D), and between skin covers pre-forms and cells/spars pre-forms (figures 6E,6F).

Figure 7.- shows a representation wherein the reinforcement element extends over the torsion box and both over leading and trailing edges, and it is constructed as separate element fastened or bonded to the torsion box.

Figure 8.- shows a representation wherein the reinforcement element extends over the torsion box and both over leading and trailing edges, and it is constructed as a integrated element, on the skin covers pre-forms (figures 8A-8D), and between skin covers pre-forms and cells/spars pre-forms (figures 8E,8F).

Figure 9.- shows a detail of the auxiliary tooling used for manufacturing the reinforcement element extending around the leading edge.

Figure 10.- shows the torsion of the HTP box along the spanwise axis.

Figure 11.- shows the torsion inertia moment of the reinforcement element.

Figure 12.- shows a simplified geometry of the reinforcement element and a rib.

## Preferred embodiment of the invention

Figures 3 to 8 shows a multi-cell structure (10) of a torsion box (1), wherein the multi-cell structure is obtained from a composite material and have three cells (11a,11b,11c) extending span-wise at the torsion box, and defining upper and lower surfaces (18,19). The cells are longitudinal channels defined by several stringers placed and fixed (co-cured) in a consecutive manner, and grouped in pairs symmetrically arranged with respect to each other such as each pair define a cell. For example, in figures 3 to 8, the cell (11 a) is defined by a first pair of spars (12a,13a), cell (11b) is defined by a second pair of spars (12b,13b) and so on.

Each spar (12a,13a, 12b,13b,12c,13c) has a C-shaped cross-sectional shape, having a web (14), upper and lower flanges (15', 15") and folded edges (16', 16") at the free ends of the spar. As shown in the figures, the folded edges of each pair of symmetrical spars, overlap and are in contact such as together form stringers (17) of the structure.

The torsion box structure also comprises upper and lower skin covers (5,6) also of composite material, which are respectively joined to the upper and lower surfaces (18,19) of the multi-cell structure.

According to the invention, the structure is provided with at least one belt-like (or ring-like) reinforcing element (20) which has the form of a belt or strip, that is, a thin and narrow body with respect to the overall size of the structure. This reinforcing element (20) is a single body configured as a closed loop (with no ends), as shown for example in the embodiments of figures 3B, 4E, 6F and 8E. However, in alternative embodiments the reinforcing element (29) is formed by two or more individual segments, for example in the embodiments of figures 3A,4B,4D, 6A, 6B,6C, 6D, 7B, 7D ,8B, 8D.

Still, in other alternative embodiments, the reinforcing element is a single body configured as an open loop (with two ends), as shown for example in the embodiments of figures 4A,4C, 4F, 6E, 7A, 7C, 8A, 8C, 8F. This configuration of the reinforcing element with a gap at a front part, provides the advantage that the assembly of the inboard and outboard leading edges is optimized, and an auxiliary attachment rib can be fitted if necessary.

Nevertheless, in all these three alternatives, either with the reinforcing element (20) formed as a single body or as several individual segments, the reinforcing element extends following parts of the outer perimeter of the torsion box or following the entire perimeter of the same, and it is transversely arranged with respect to an axis (X) placed or oriented at the span-wise direction as shown in figure 2. This means that the longitudinal axis of the reinforcement element is transversal to the span-wise direction.

The reinforcing element (20) is made of a metallic or a composite material like CFRP. Some parts of the reinforcing element (20) are fixed to the upper and lower surfaces (18,19) of the multi-cell structure, which can be carried out by fastening means in the case of a metallic reinforcement, or by a co-curing, co-bonding or secondary bonding process in the case of a composite reinforcement.

Preferably, the reinforcing element (20) is a stack of plies (or laminate) of composite material, wherein each ply has unidirectional orientated fibers. According to the invention, the majority of the plies of the reinforcing element are substantially arranged at the same direction than a load introduction direction (Y), and transversal to the span-wise axis (X). This feature is shown in more detail in figures 2B to 2D, wherein it can be observed that the reinforcement element is inclined in the same direction than the load introduction direction (Y) which appears for example at a fitting or pivot point (24) and which depends on the design of each particular torsion box.

In some embodiments, for example in embodiments 3B, 6F, the reinforcement element extends only around the multi-cell structure, and then it has a "rectangular" configuration, whereas in other embodiments the reinforcement element is formed by two segments (20a,20b) respectively joined to upper and lower surfaces (18,19), as is the case form example of figures 3A, 4B, 6A,6B,6C, 6D.

A torsion box structure commonly has a leading edge profile (21) fitted to a front spar of the torsion box, and a trailing edge profile (22) fitted to a rear spar of the torsion box, as shown in figure 2. The invention provides that a part of the reinforcing element (20) also extends around the leading edge and/or the trailing edge. In this way and by properly dimensioning the reinforcement element (20), this can be used as a support or fitting for receiving caps or panels of the leading edge and/or trailing edge.

When the reinforcing element (20) extends around the trailing edge, this can be done integrating only the upper panels (figures 6B,6D) or upper and lower panels of the trailing edge (figure 6A,6C). Due to maintenance requirements, the lower panels of the trailing edges must be removable, therefore when the reinforcing element (20) extend on both upper and lower panels of the trailing edge, these rear parts of the reinforcement element are fitted on the Trailing Edge Ribs (TER) or Bearing Edge Ribs (BER) (24) as shown in figure 5.

This can be observed for example in the embodiments of figures 4A-4F, 7A-7D, 8A-8F, wherein the reinforcement element (20) has a front part (20c) extending on the perimeter of the leading edge of the structure. Similarly, in other embodiments the reinforcement element (20) has a rear part (20d) extending towards the trailing edge of the structure (see figures 6A-6F). Still, in other embodiments, the reinforcement element (20) has a front part (20c) extending on the perimeter of the leading edge, and a rear part (20d) extending towards the trailing edge of the structure (see figures 7A-7D, 8A-8F).

For curing these front and rear parts (20c,20d) of the reinforcement element (20), auxiliary tooling (23) are used having surfaces with the desired shape for those front and rear parts, which are subsequently removed after the curing process.

Additionally, the reinforcement can be placed anywhere in the structure, for example at least one part of the reinforcement element (20) is placed between the multi-cell structure (10) and a skin cover (5,6) (see figures 3B,4E, 4F, 6E, 6F, 8E, 8F) . Alternatively, at least one part of the reinforcement element (20) is placed on a skin cover (5,6) which is in turn placed on the spars flanges.

For the integration of the reinforcement element, a groove (not shown) is formed on one of the surfaces of the skin covers and/or the spars flanges depending on each particular embodiment, in such a way that the reinforcement element is received within the groove. The groove is dimensioned such as the reinforcement element is flush with that surface, and it does not protrude from the structure.

As shown for example in figures 3B, 4E,4F, 6E, 6F, 8E, 8F, one or more parts of the reinforcement element (20) are placed between spars webs.

Typically, the leading edge and the trailing edge comprise respectively two or more sections (21a,21b),(22a,22b,22c) span-wise arranged in the structure. Preferably, the reinforcement element (20) is placed in correspondence with the separation line between adjacent leading edge and the trailing edge sections, as shown in figure 2, in order to allow the attachment of these sections to the reinforcement element, which in this case also serve as a support for those sections.

The reinforcement element (20) thickness (t) and width (b) are calculated for each particular application to reduce the magnitude of deformations of the torsion box. A simplified approach to approximate the sizing of the ring is explained hereafter.

The torsion of the HTP box along the spanwise axis is defined by the following equation at each transversal section, and it is illustrated in figure 10:

$$\theta = \frac{T}{G \cdot I_t}$$

where,
θ = torsion angle
T= resultant torsion moment
$G \cdot I_t$=equivalent torsion rigidity
*(G= constant, material shear modulus; $I_t$= equivalent torsion inertia moment)*

The reinforcement element (20) shall provide a value of rigidity similar to the one provided by a rib in that position; therefore, the torsion inertia moment (figure 11) shall be similar.

$$I_{t_reinforcement\ element} \sim I_{t_rib}$$

Considering a simplified rectangular geometry of the reinforcement element and a rib, the reinforcement element thickness (t) can be obtained approximately, by equaling the inertia moments of the sections (see figure 12).

$$I_{t_rib} = \beta \cdot\cdot h^3 \qquad I_{t_ring} = \frac{4 \cdot c_m{}^2 \cdot h_m{}^2}{2 \cdot \frac{c_m}{\boldsymbol{t}} + 2 \cdot \frac{h_m}{\boldsymbol{t}}}$$

Where:

β is a constant, function of the rectangle dimensions;
$\beta = \beta(\frac{c}{h})$ with values from β(1)=0,141 to β(∞)=0,33

c is a the chord of the rib.

Cm: is the size of a side of the loop formed by the reinforcement element

Hm: is the size of another side of the loop formed by the reinforcement element

On the other hand, the width of the reinforcement element (b) will be similar to the rib flanges width.

$$b_{min} \sim b_{rib}$$

Other preferred embodiments of the present invention are described in the appended dependent claims and the multiple combinations threreof.

## Claims

1. A multi-spar torsion box structure comprising:

a plurality of spars of composite material arranged to form a multi-cell structure with two or more cells extending span-wise at the torsion box, the multi-cell structure having upper and lower surfaces,
upper and lower skin covers of composite material respectively joined to the upper and lower surfaces of the multi-cell structure,
**characterized in that** the structure further comprises at least one belt-like reinforcing element extending on the outer perimeter of the torsion box, and fixed to the upper and lower surfaces of the multi-cell structure, and wherein at least part of the belt-like reinforcing element is transversely arranged with respect to an axis (X) oriented at the span-wise direction of the torsion box, and wherein the belt-like reinforcing element is made of a metallic or a composite material.

**2.** Structure according to claim 1 wherein the belt-like reinforcing element is additionally arranged at a load introduction direction.

**3.** Structure according to claim 1 or 2 wherein the belt-like reinforcing element is a stack of plies of composite material having unidirectional orientated fibers, and wherein the majority of the plies of the reinforcing element are transversely arranged with respect to said axis (X) at the span-wise direction of the torsion box.

**4.** Structure according to claim 3 wherein the belt-like reinforcing element is co-cured, co-bonded or secondary bonded with a component of the structure.

**5.** Structure according to any of the preceding claims, further comprising a leading edge fitted to a front spar of the torsion box, and wherein the belt-like reinforcing element also extends on the perimeter of the leading edge.

**6.** Structure according to any of the preceding claims, further comprising a trailing edge fitted to a rear spar of the torsion box, and wherein the belt-like reinforcing element also extends towards the trailing edge.

**7.** Structure according to claims 5 and 6 wherein the leading edge and the trailing edge respectively comprise two or more sections span-wise arranged in the structure, and wherein the belt-like reinforcement element is placed in correspondence with the separation line between adjacent leading edge and the trailing edge sections.

**8.** Structure according to any of the preceding claims, wherein at least one part of the belt-like reinforcement element is placed between the multi-cell structure and a skin cover.

**9.** Structure according to claim 8 wherein another part of the belt-like reinforcement element is placed between two adjacent spars of the torsion box.

**10.** Structure according to any of the claims 1 to 7, wherein at least one part of the belt-like reinforcement element is placed on a skin cover.

**11.** Structure according to any of the claims 8 to 10, wherein a part of the belt-like reinforcement element extends around the leading edge of the structure.

**12.** Structure according to any of the claims 8 to 11, wherein a part of the belt-like reinforcement element extends around the trailing edge of the structure.

**13.** Structure according to any of the preceding claims, wherein the belt-like reinforcing element is configured as a closed loop or an open loop.

**14.** Structure according to any of the claims 1 to 12, wherein the belt-like reinforcing element is formed by two or more individual segments.

**15.** Horizontal tail plane for an aircraft having two symmetrically arranged multi-spar torsion box structures according to any of the preceding claims.

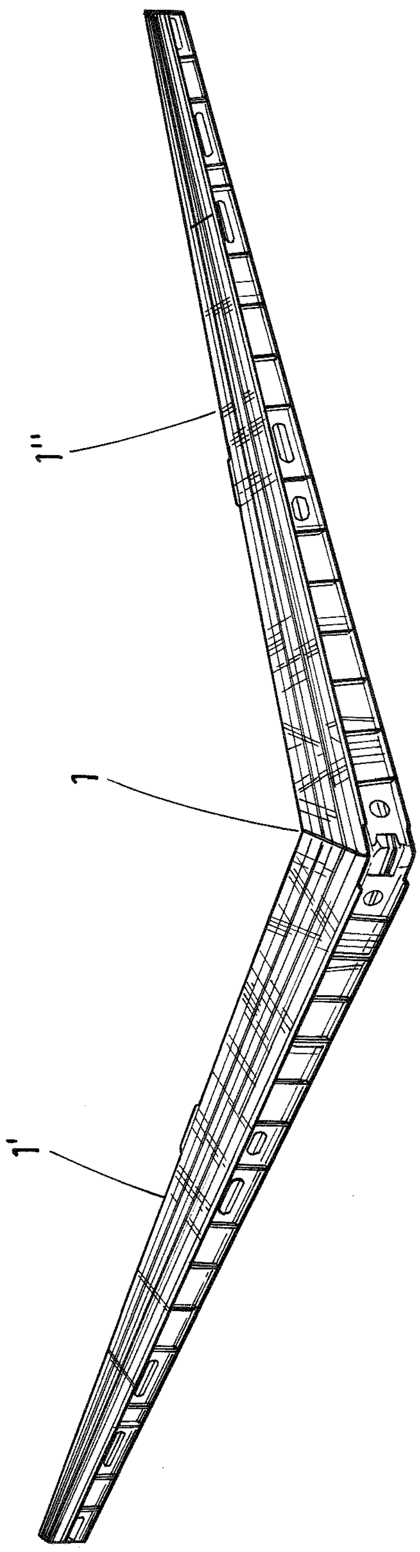


FIG.1A
PRIOR ART

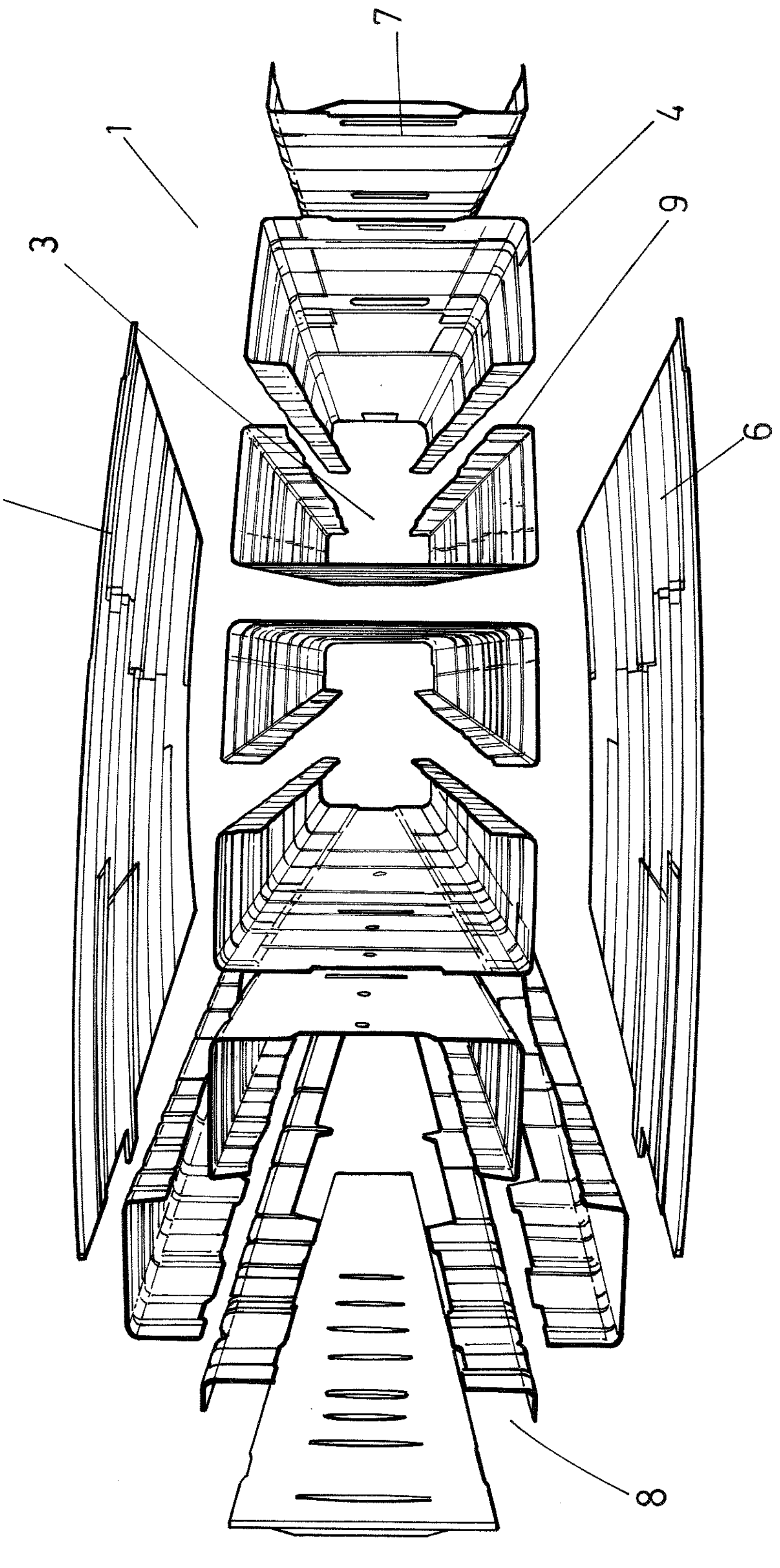


FIG.1B
PRIOR ART

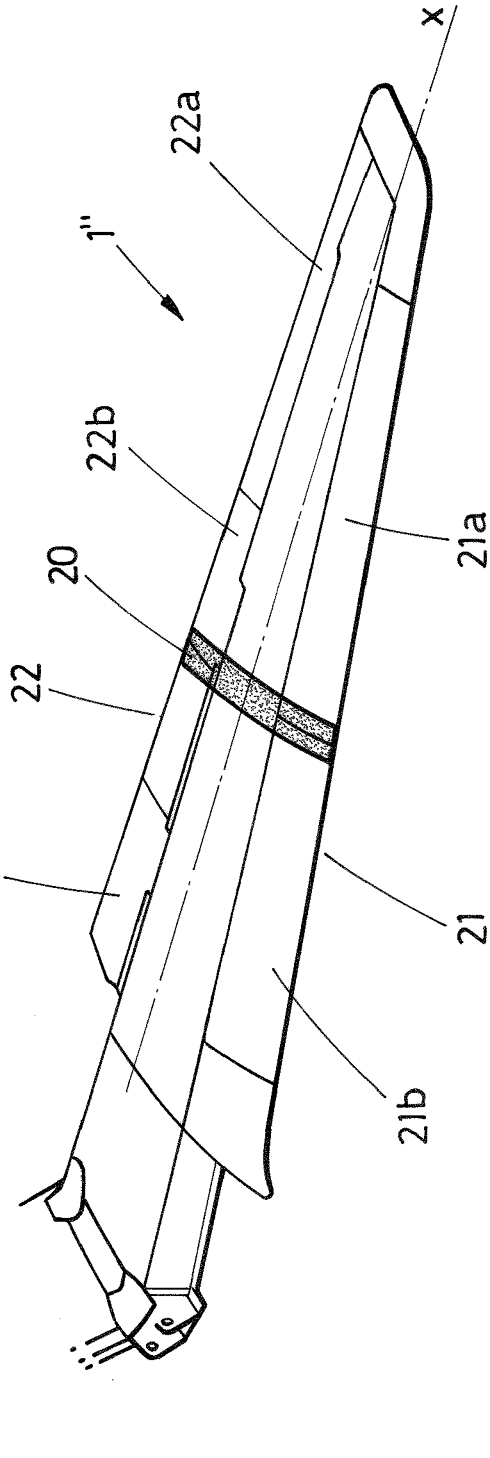


FIG.2A

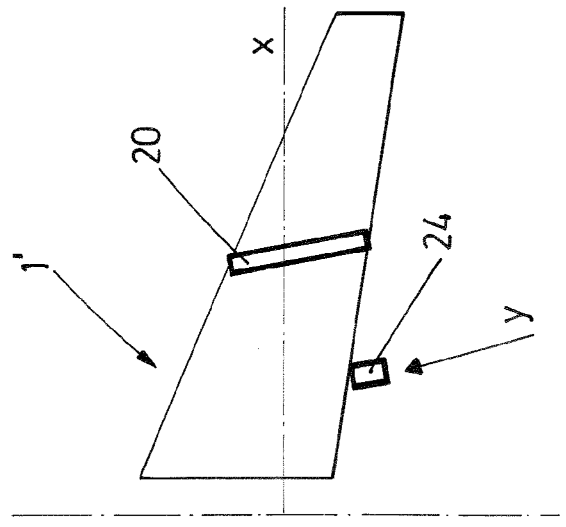


FIG.2D

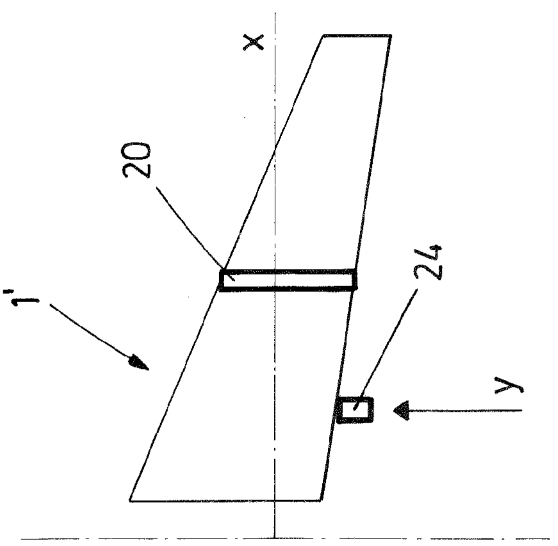


FIG.2C

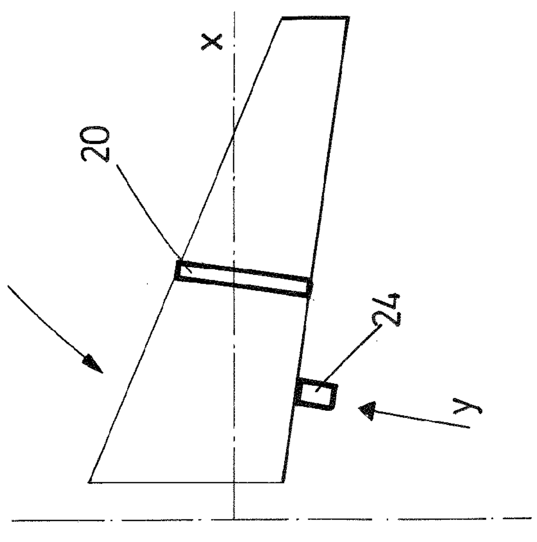


FIG.2B

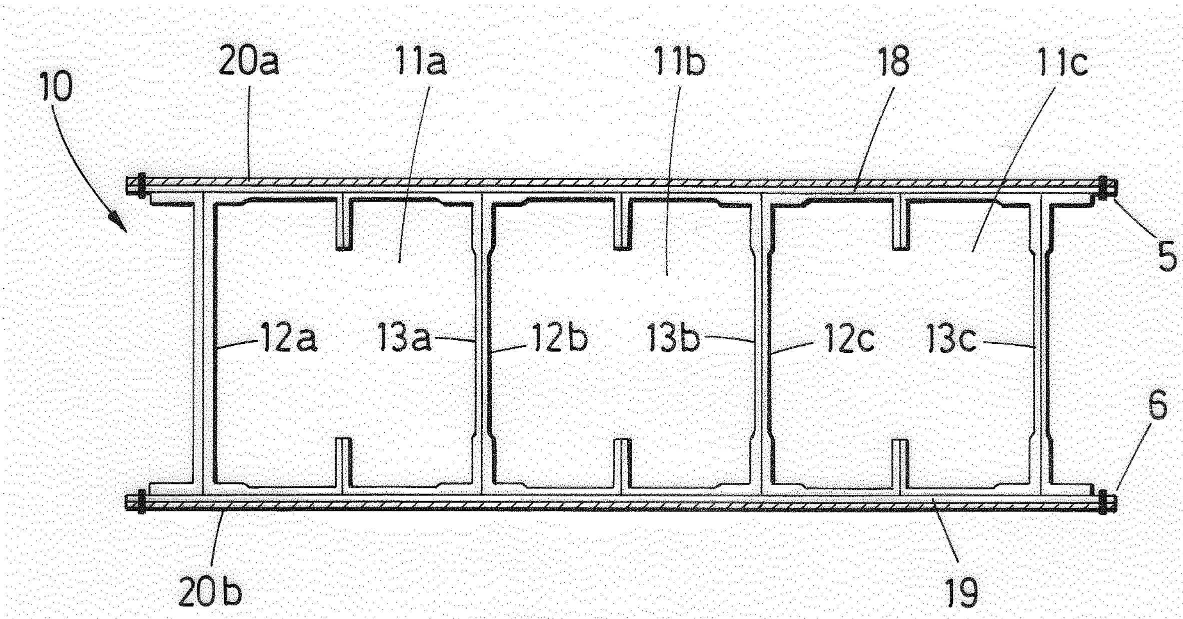
10
20a
11a
11b
18
11c
5
12a
13a
12b
13b
12c
13c
6
20b
19

FIG.3A

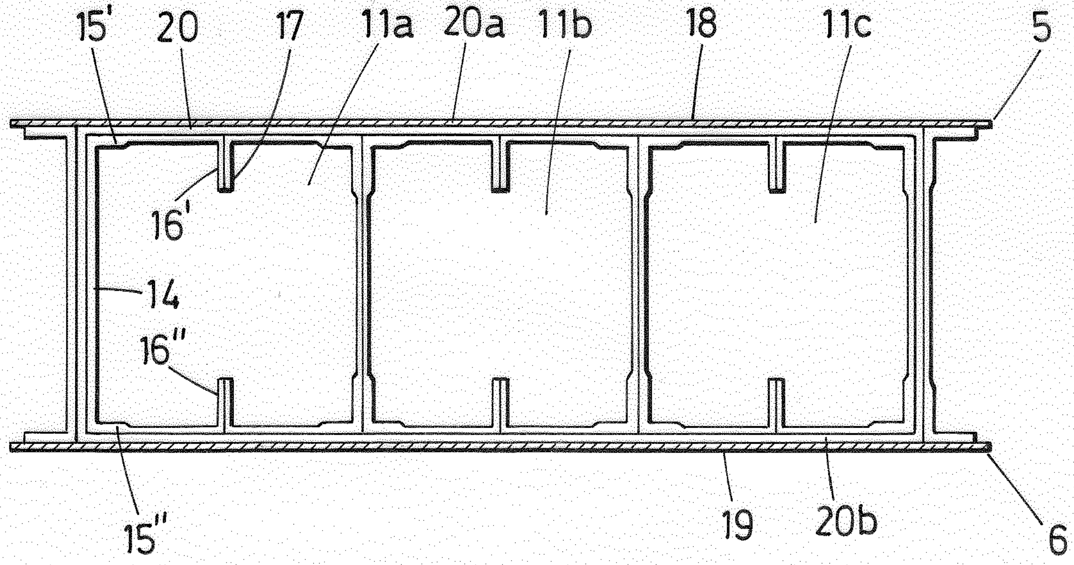
15'
20
17
11a
20a
11b
18
11c
5
16'
14
16''
15''
19
20b
6

FIG.3B

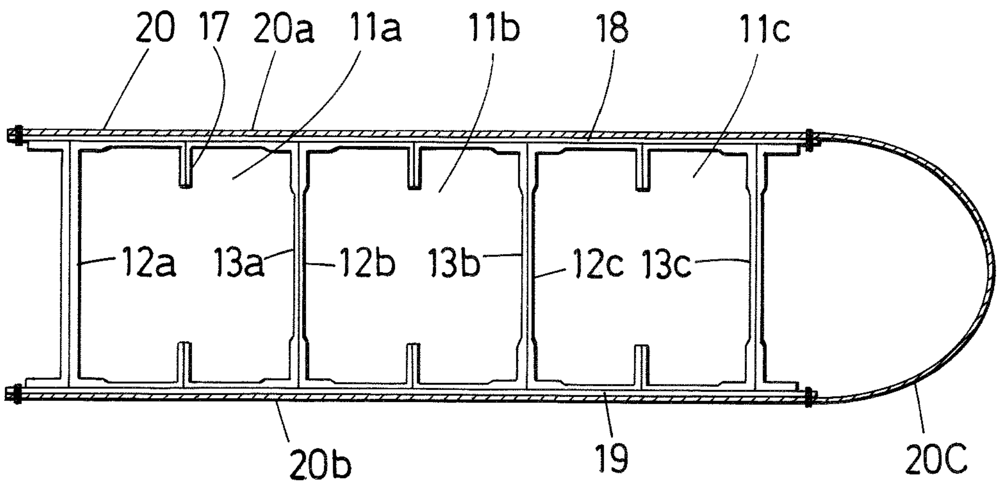
20
17
20a
11a
11b
18
11c
12a
13a
12b
13b
12c
13c
20b
19
20C

FIG.4A

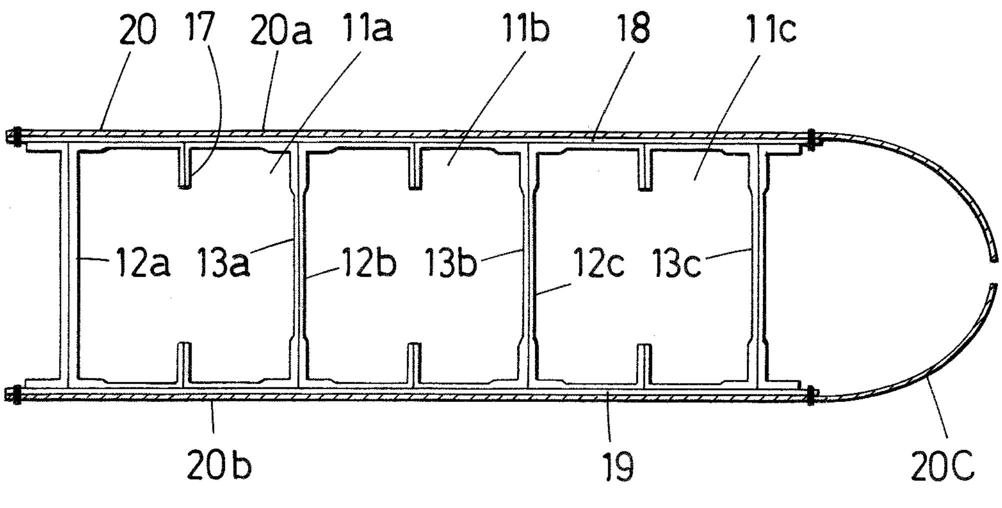
20
17
20a
11a
11b
18
11c
12a
13a
12b
13b
12c
13c
20b
19
20C

FIG.4B

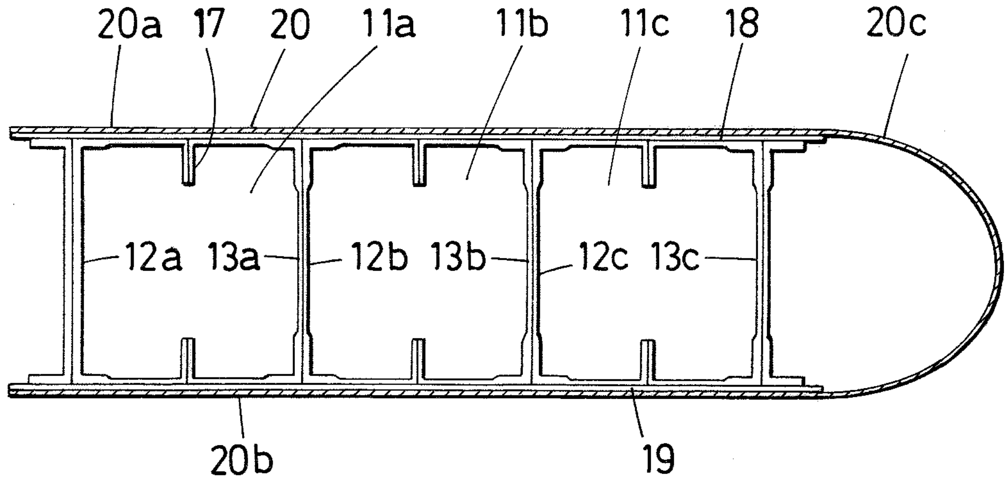
20a
17
20
11a
11b
11c
18
20c
12a
13a
12b
13b
12c
13c
20b
19

FIG. 4C

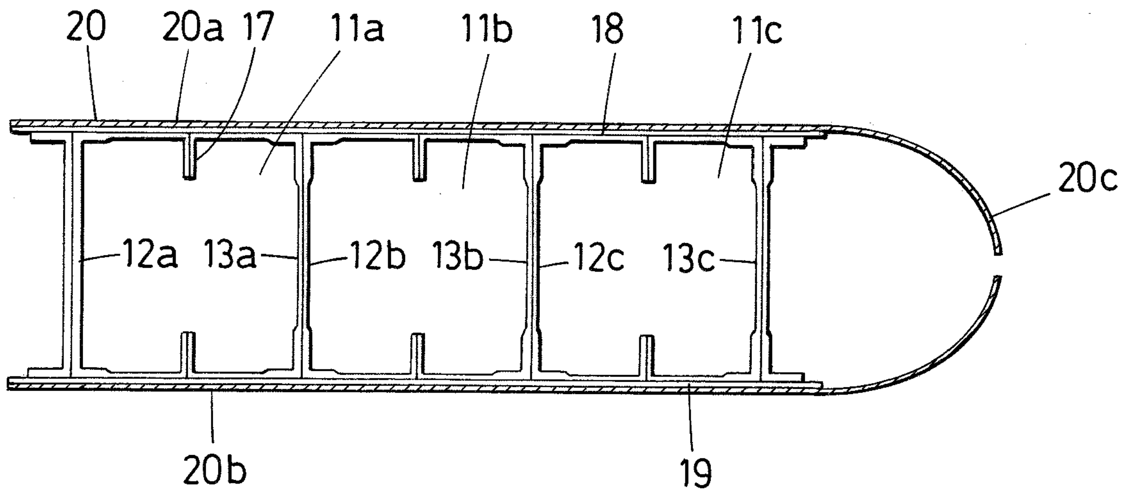
20
20a
17
11a
11b
18
11c
20c
12a
13a
12b
13b
12c
13c
20b
19

FIG. 4D

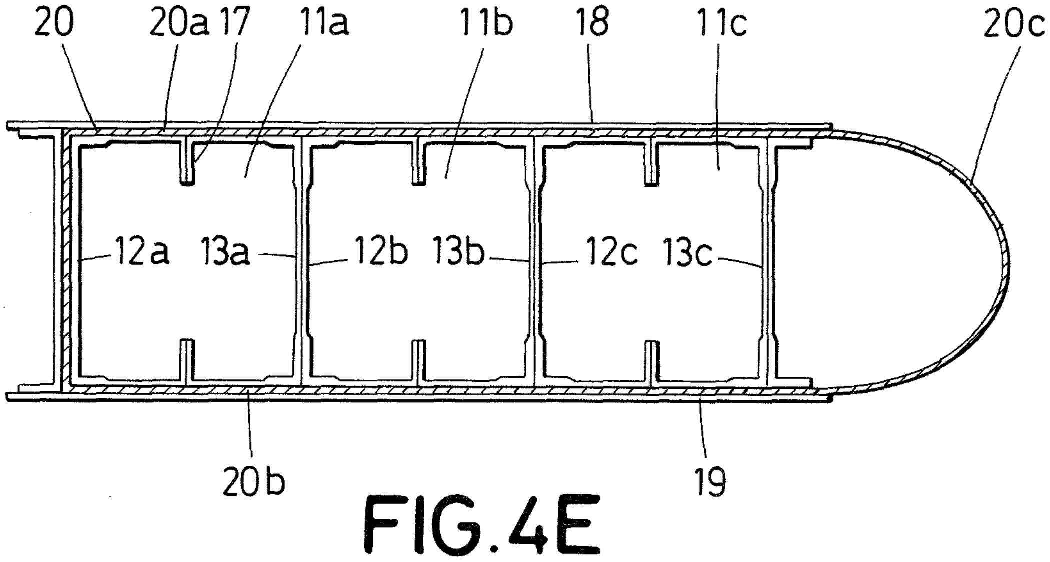
20
20a
17
11a
11b
18
11c
20c
12a
13a
12b
13b
12c
13c
20b
19

FIG.4E

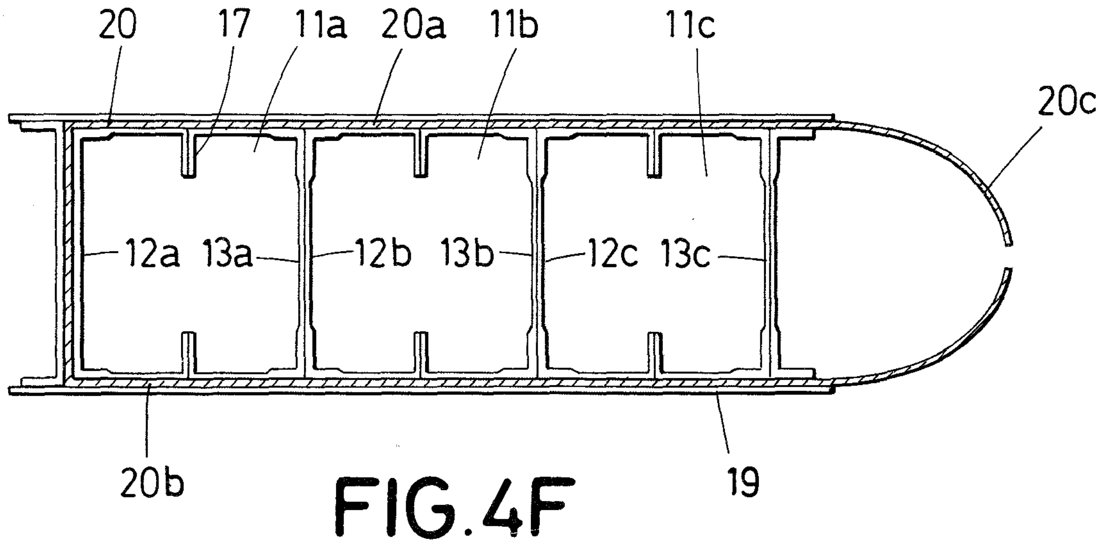
20
17
11a
20a
11b
11c
20c
12a
13a
12b
13b
12c
13c
20b
19

FIG.4F

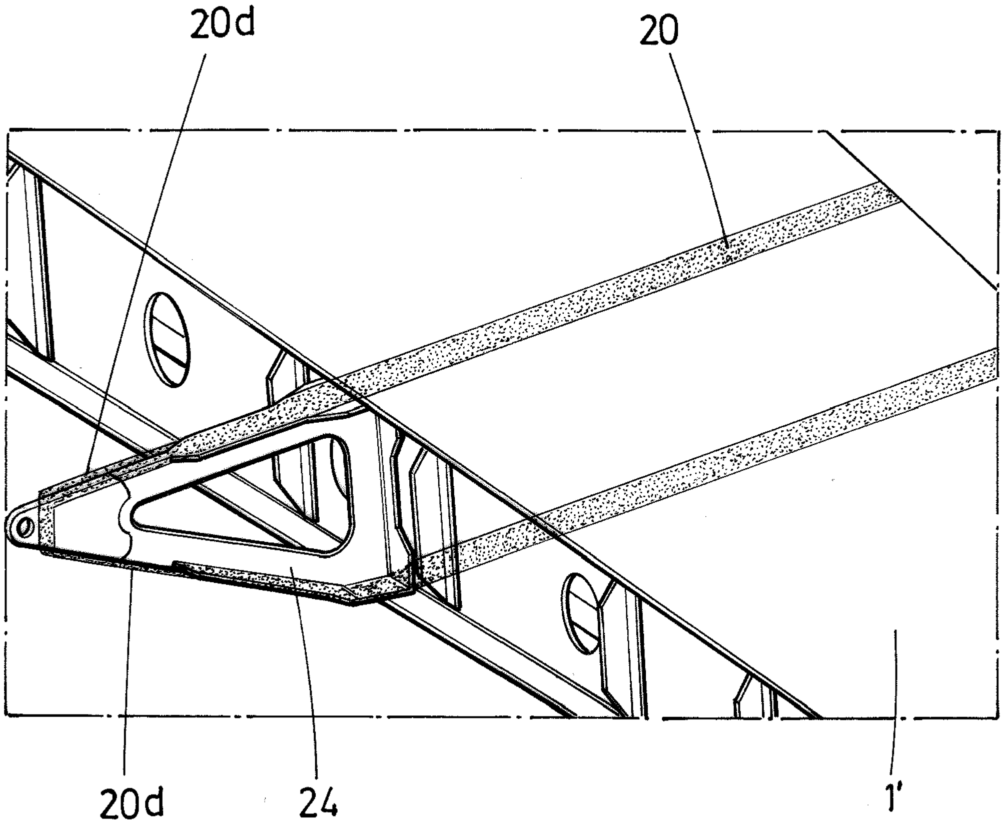


FIG.5

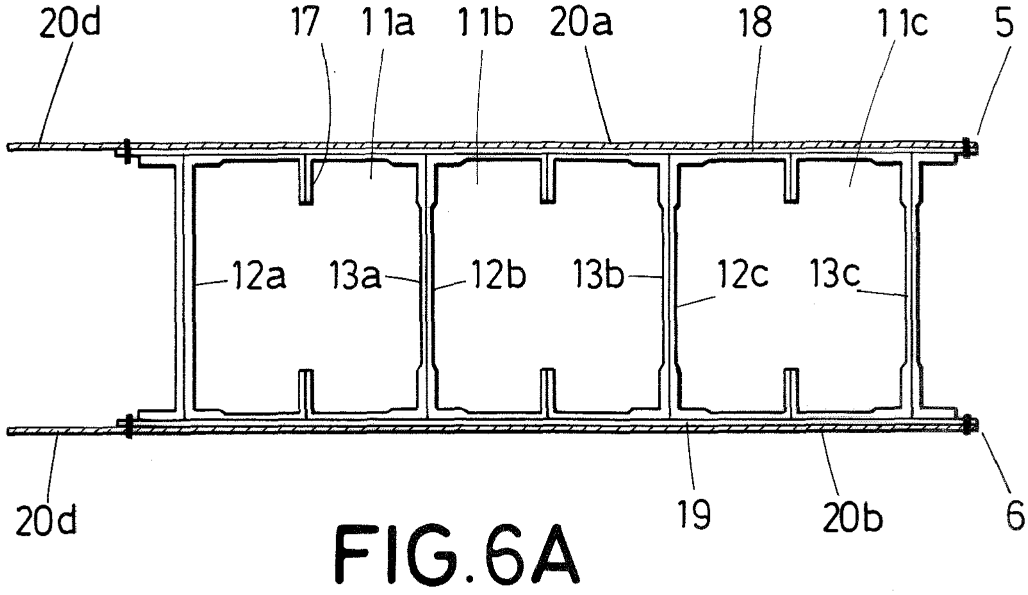
20d
17
11a
11b
20a
18
11c
5
12a
13a
12b
13b
12c
13c
20d
19
20b
6

FIG.6A

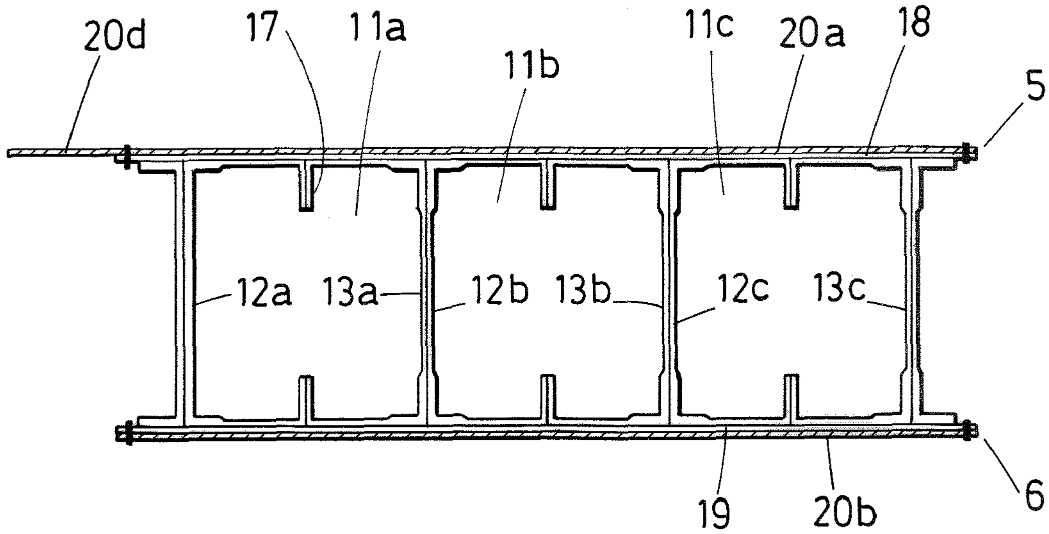
20d
17
11a
11b
11c
20a
18
5
12a
13a
12b
13b
12c
13c
19
20b
6

FIG.6B

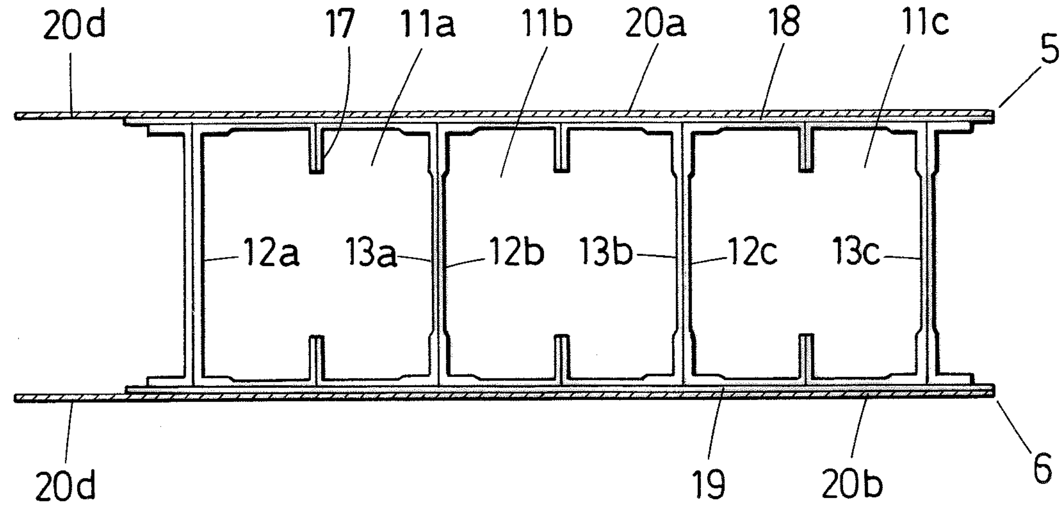
20d
17
11a
11b
20a
18
11c
5
12a
13a
12b
13b
12c
13c
20d
19
20b
6

FIG.6C

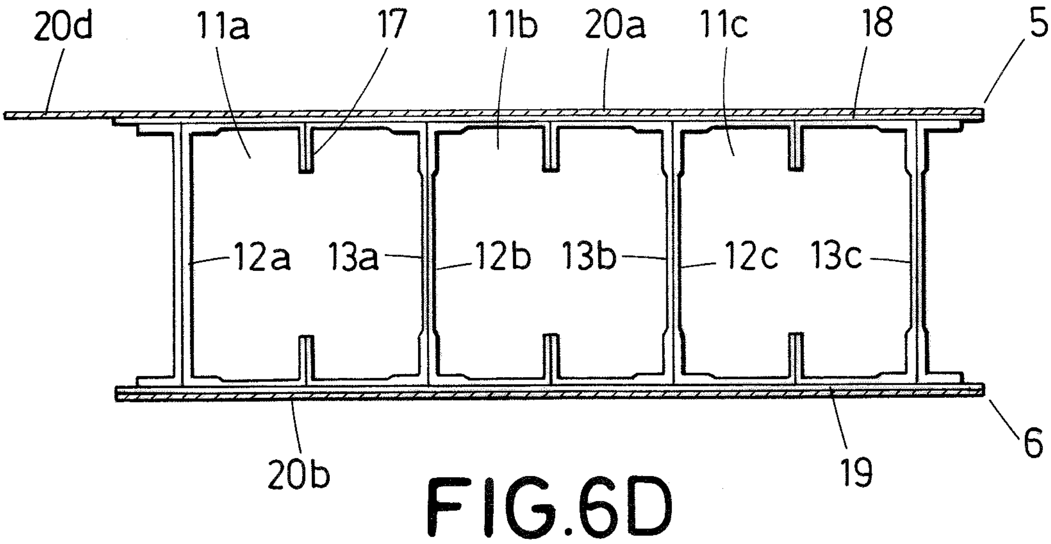
20d
11a
17
11b
20a
11c
18
5
12a
13a
12b
13b
12c
13c
20b
19
6

FIG.6D

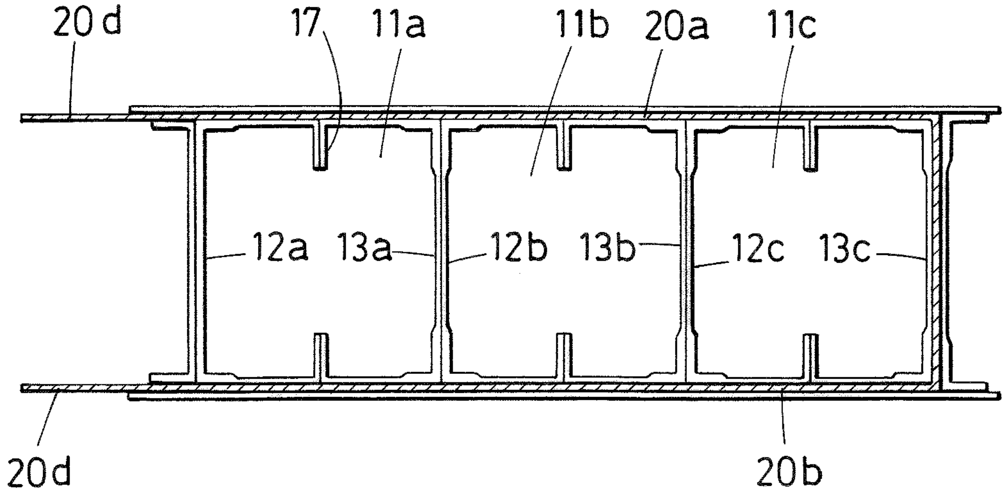
20d
17
11a
11b
20a
11c
12a
13a
12b
13b
12c
13c
20d
20b

FIG.6E

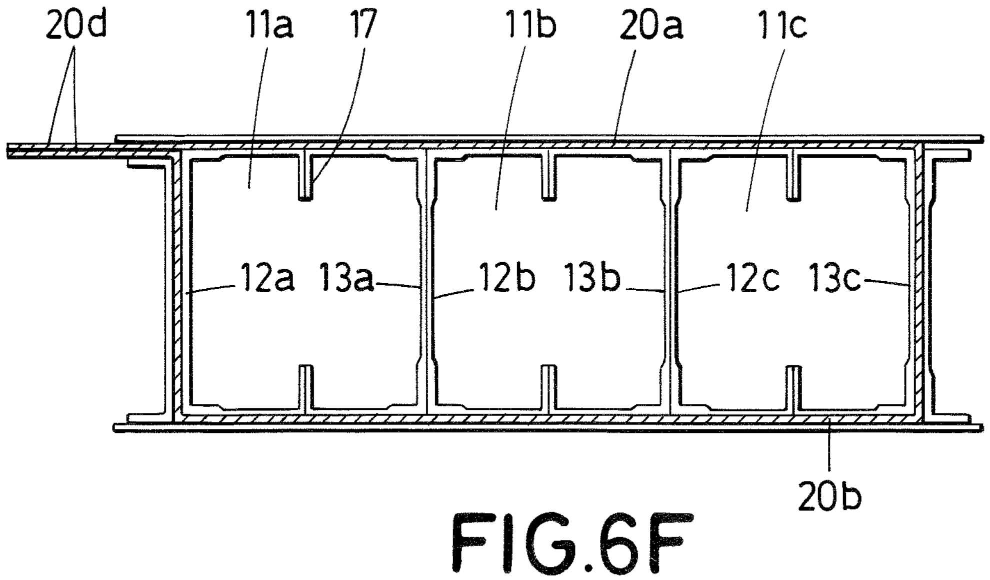
20d
11a
17
11b
20a
11c
12a
13a
12b
13b
12c
13c
20b

FIG.6F

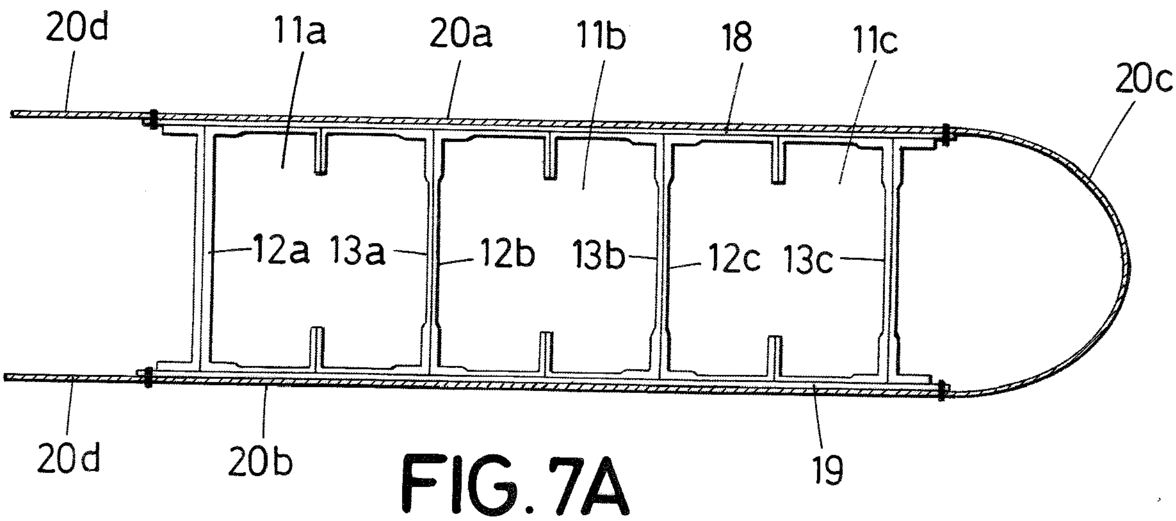
20d
11a
20a
11b
18
11c
20c
12a
13a
12b
13b
12c
13c
20d
20b
19

FIG. 7A

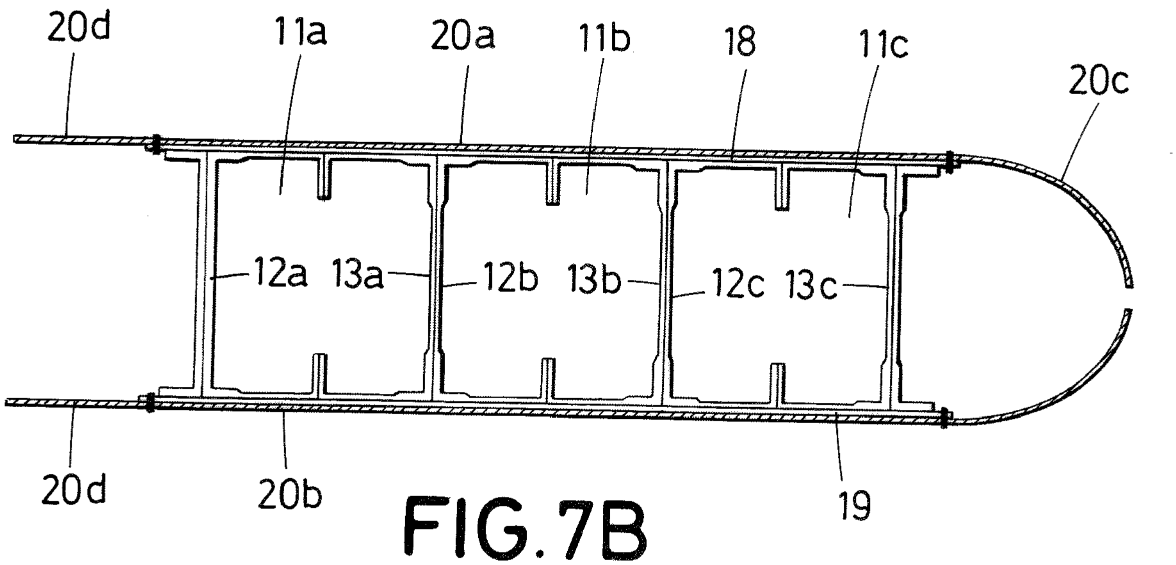
20d
11a
20a
11b
18
11c
20c
12a
13a
12b
13b
12c
13c
20d
20b
19

FIG. 7B

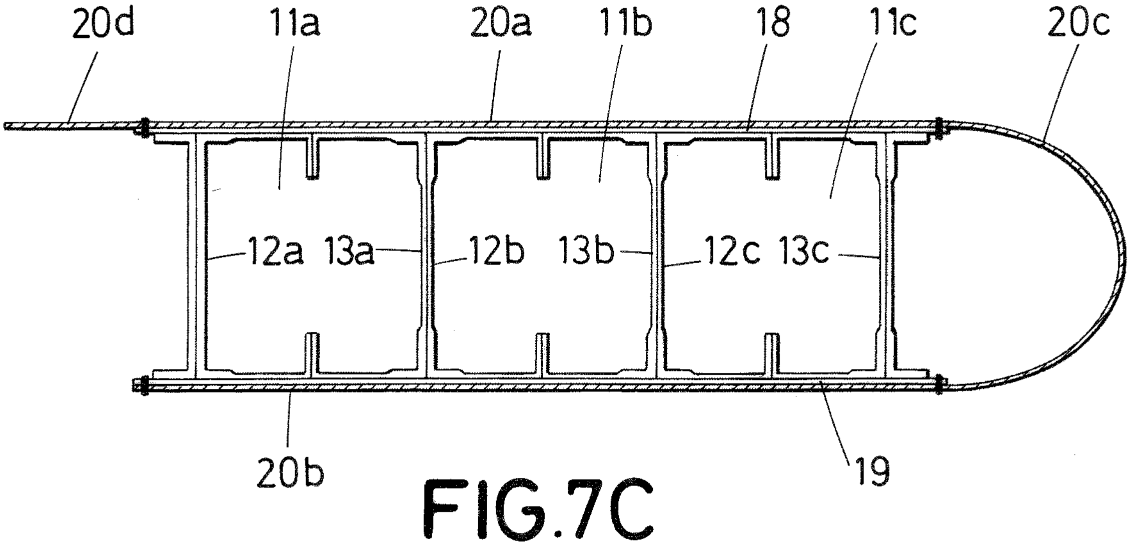
20d
11a
20a
11b
18
11c
20c
12a
13a
12b
13b
12c
13c
20b
19

FIG.7C

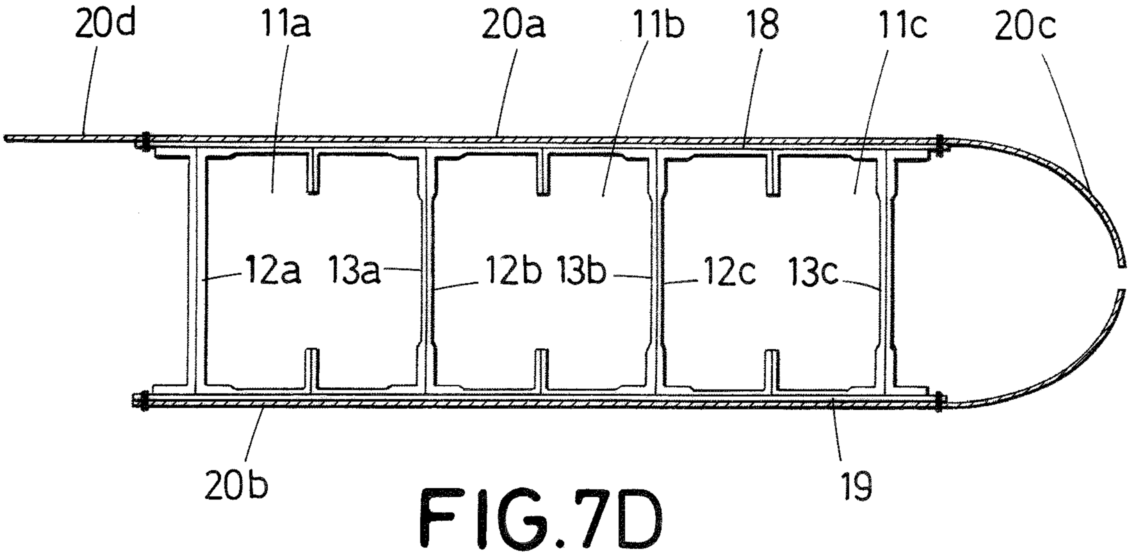
20d
11a
20a
11b
18
11c
20c
12a
13a
12b
13b
12c
13c
20b
19

FIG.7D

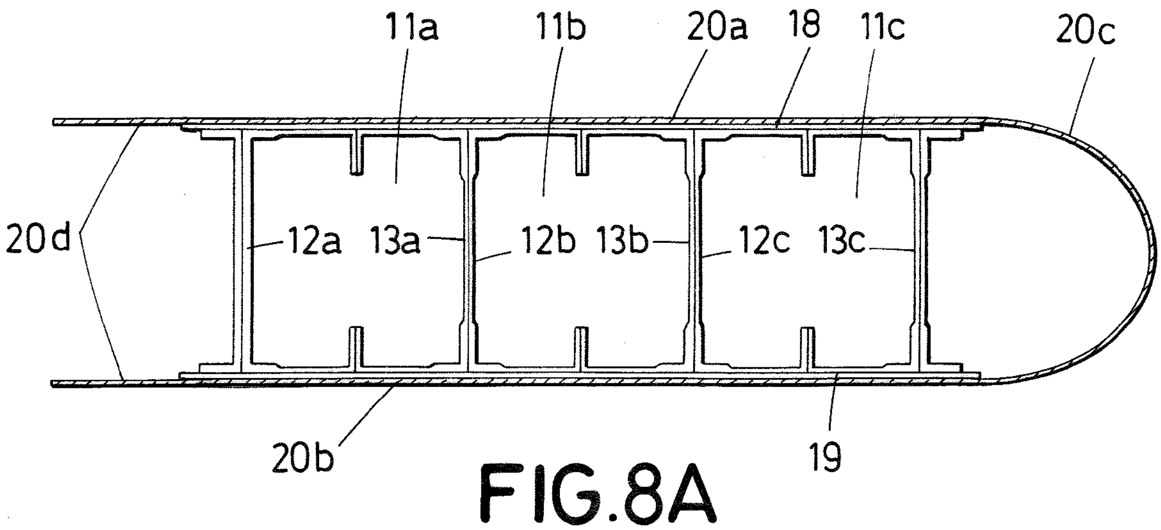
11a
11b
20a
18
11c
20c
20d
12a
13a
12b
13b
12c
13c
20b
19

FIG.8A

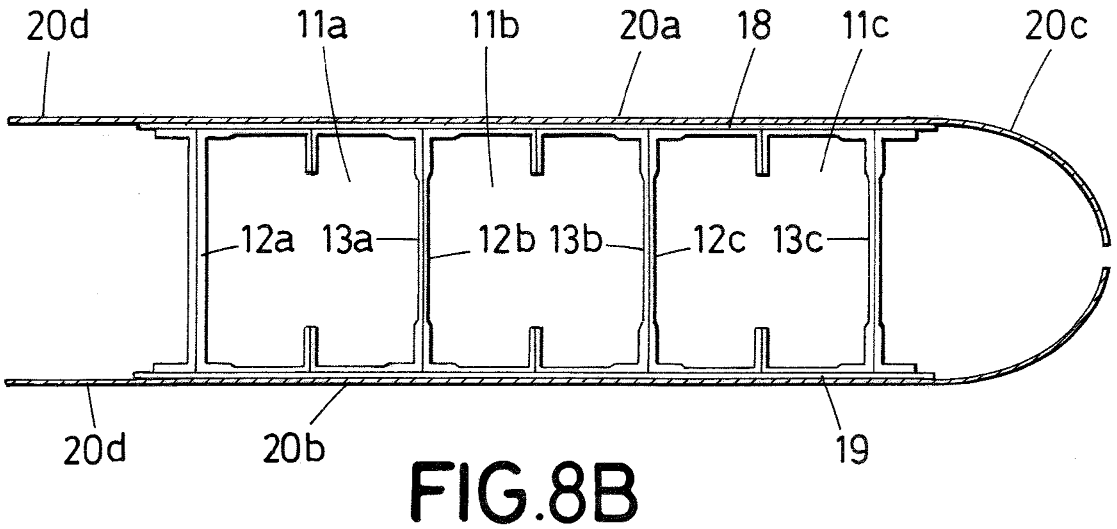
20d
11a
11b
20a
18
11c
20c
12a
13a
12b
13b
12c
13c
20d
20b
19

FIG.8B

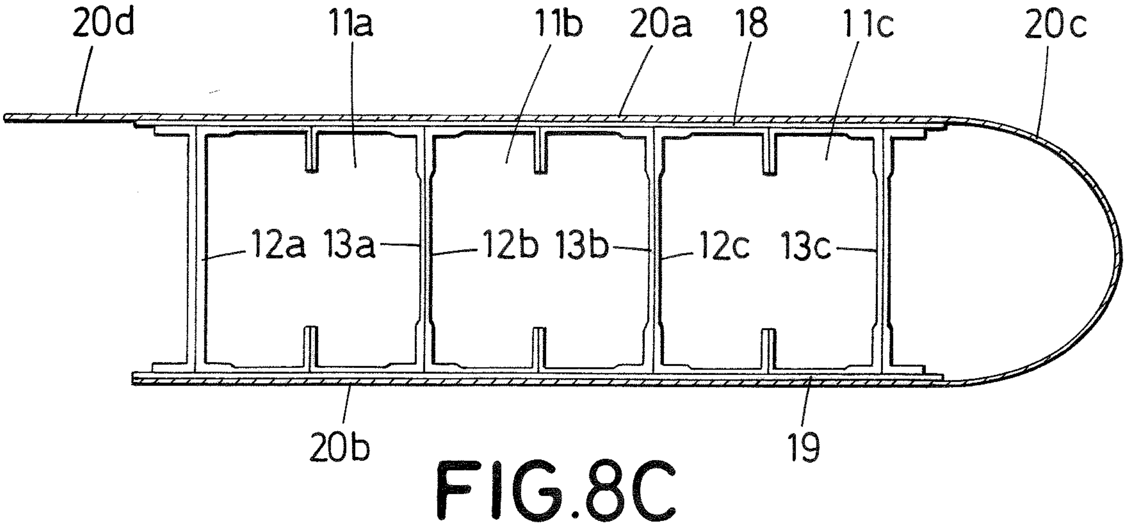
20d
11a
11b
20a
18
11c
20c
12a
13a
12b
13b
12c
13c
20b
19

FIG.8C

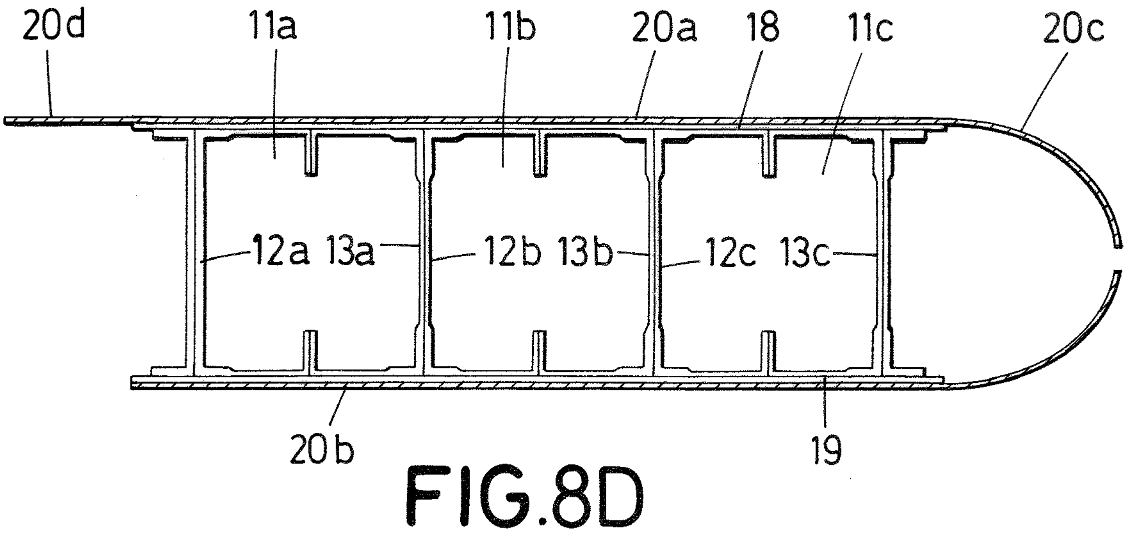
20d
11a
11b
20a
18
11c
20c
12a
13a
12b
13b
12c
13c
20b
19

FIG.8D

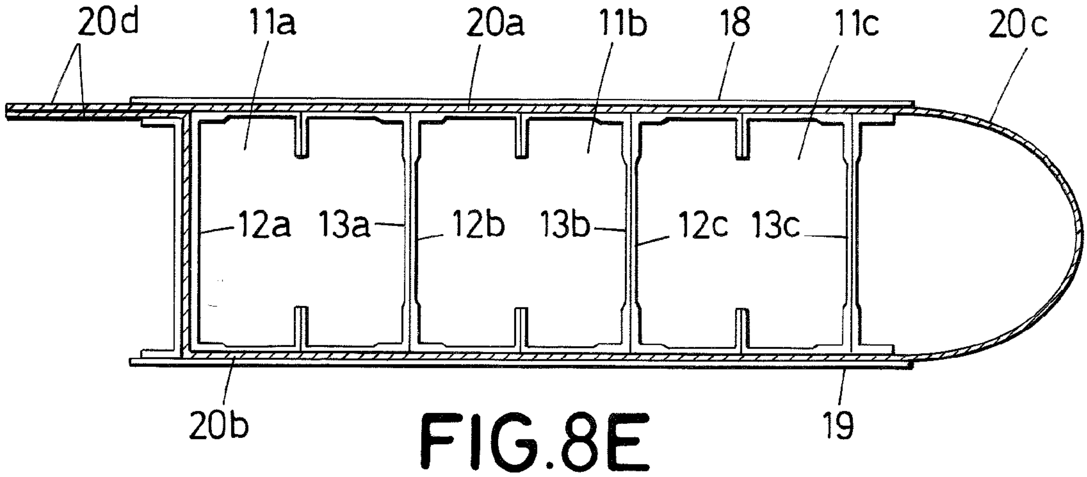


FIG.8E

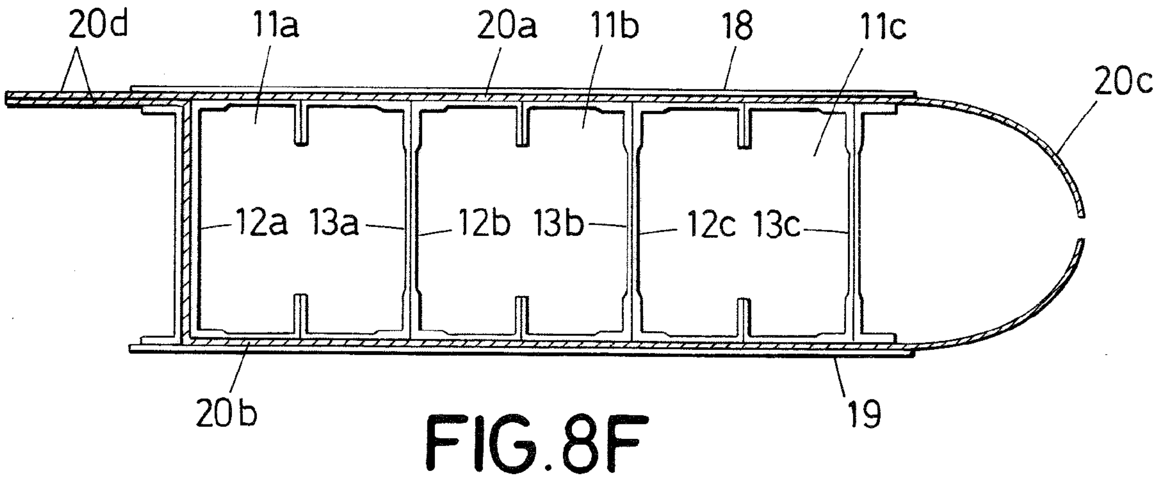


FIG.8F

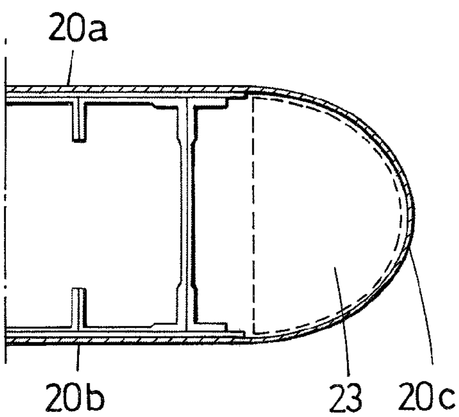


FIG.9A

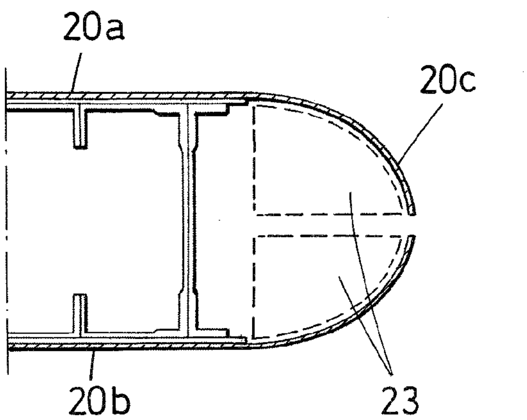


FIG.9B

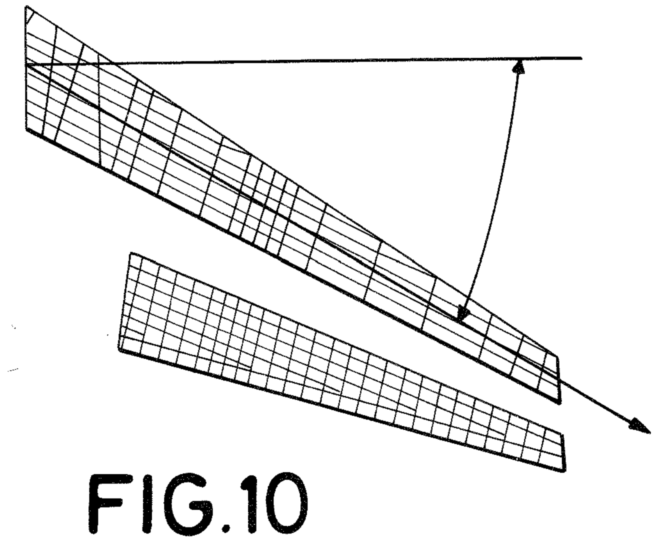

FIG.10

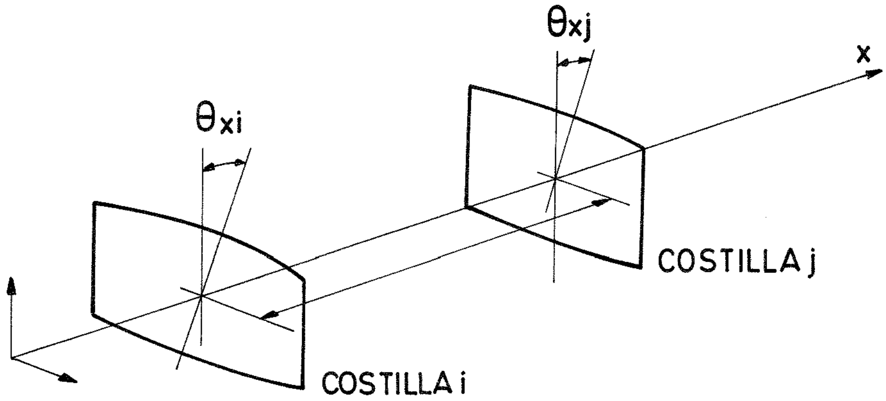


FIG.11

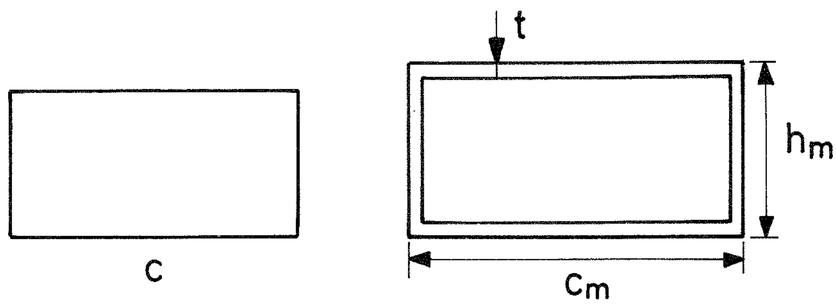


FIG.12

Europäisches Patentamt
European Patent Office
Office européen des brevets

# EUROPEAN SEARCH REPORT

Application Number
EP 15 38 2269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 967 147 A2 (FUJI HEAVY IND LTD [JP]) 29 December 1999 (1999-12-29) * abstract; figures 1,4,5,6 * * paragraphs [0023] - [0025] * | 1,2,6,7, 9,13-15 | INV. B64C3/26 B64C5/02 B64C3/18 |
| X | US 2012/043422 A1 (CAMPANA JOSEPH H [US]) 23 February 2012 (2012-02-23) * abstract; figure 6 * * paragraphs [0073] - [0076] * | 1 | |
| A | US 2010/193636 A1 (DE VITA VINCENZO [IT] ET AL) 5 August 2010 (2010-08-05) * abstract; figures 1,2 * | 1 | |
| A | US 4 565 595 A (WHITENER PHILIP C [US]) 21 January 1986 (1986-01-21) * abstract; figure 1 * | 1 | |
| A | US 6 190 484 B1 (APPA KARI [US]) 20 February 2001 (2001-02-20) * abstract; figures 7,8 * | 1 | |

TECHNICAL FIELDS SEARCHED (IPC)

B64C
B29C

The present search report has been drawn up for all claims

1

| Place of search | Date of completion of the search | Examiner |
|---|---|---|
| Munich | 28 October 2015 | Cesaro, Ennio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 15 38 2269

This annex lists the patent family members relating to the patent documents cited in the above-mentioned European search report. The members are as contained in the European Patent Office EDP file on
The European Patent Office is in no way liable for these particulars which are merely given for the purpose of information.

28-10-2015

| Patent document cited in search report | Publication date | Patent family member(s) | Publication date |
|---|---|---|---|
| EP 0967147 A2 | 29-12-1999 | DE 69911507 D1 | 30-10-2003 |
| | | DE 69911507 T2 | 24-06-2004 |
| | | EP 0967147 A2 | 29-12-1999 |
| | | JP 2000006893 A | 11-01-2000 |
| | | US 6237873 B1 | 29-05-2001 |
| US 2012043422 A1 | 23-02-2012 | CN 103097240 A | 08-05-2013 |
| | | EP 2605959 A1 | 26-06-2013 |
| | | JP 2013534194 A | 02-09-2013 |
| | | US 2012043422 A1 | 23-02-2012 |
| | | US 2013105629 A1 | 02-05-2013 |
| | | WO 2012024051 A1 | 23-02-2012 |
| US 2010193636 A1 | 05-08-2010 | AT 544581 T | 15-02-2012 |
| | | AU 2008273838 A1 | 15-01-2009 |
| | | BR PI0812598 A2 | 08-09-2015 |
| | | CA 2692990 A1 | 15-01-2009 |
| | | EP 2176058 A1 | 21-04-2010 |
| | | ES 2382232 T3 | 06-06-2012 |
| | | JP 5259709 B2 | 07-08-2013 |
| | | JP 2010533098 A | 21-10-2010 |
| | | RU 2010104675 A | 20-08-2011 |
| | | US 2010193636 A1 | 05-08-2010 |
| | | WO 2009007873 A1 | 15-01-2009 |
| US 4565595 A | 21-01-1986 | NONE | |
| US 6190484 B1 | 20-02-2001 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2153979 A1
- US 20090001218 A1